(19) Europäisches Patentamt
European Patent Office
Office européen des brevets

(11) Veröffentlichungsnummer: **0 586 997 A2**

(12) # EUROPÄISCHE PATENTANMELDUNG

(21) Anmeldenummer: **93113801.0**

(51) Int. Cl.$^5$: **C08G 77/60**

(22) Anmeldetag: **30.08.93**

(30) Priorität: **05.09.92 DE 4229743**

(43) Veröffentlichungstag der Anmeldung: **16.03.94 Patentblatt 94/11**

(84) Benannte Vertragsstaaten: **AT BE CH DE DK ES FR GB GR IE IT LI LU NL PT SE**

(71) Anmelder: **Solvay Deutschland GmbH**
**Hans-Böckler-Allee 20**
**D-30173 Hannover(DE)**

(72) Erfinder: **Nover, Christoph**
**Im Stiegfeld 91**
**D-3163 Sehnde 3(DE)**

(74) Vertreter: **Lauer, Dieter, Dr.**
**c/o Solvay Deutschland GmbH**
**Hans-Böckler-Allee 20**
**D-30173 Hannover (DE)**

(54) **Quellfähige, vernetzte, unschmelzbare Polycarbosilane.**

(57) Beschrieben werden quellfähige, vernetzte Polycarbosilane sowie Gele von solchen Polycarbosilanen. Die Gele eignen sich besonders gut zur Herstellung von Fäden oder Fasern.

EP 0 586 997 A2

Die Erfindung bezieht sich auf neuartige quellfähige, vernetzte, unschmelzbare Polycarbosilane, auf Gele, die quellfähige, vernetzte, unschmelzbare Polycarbosilane enthalten, Verfahren zur Herstellung von Polycarbosilan-Formkörpern unter Verwendung der Gele und danach erhaltene Polycarbosilan-Formkörper, insbesondere in Faden- oder Faserform, sowie entsprechende keramisierte SiC-Formkörper.

SiC-Fasern bzw. Fäden (Fasern weisen eine Länge von bis zu 180 mm auf, Fäden weisen eine Länge von 180 mm oder länger auf) werden beispielsweise zur Herstellung von Sandwich-Strukturen aus faserverstärkter Keramik verwendet, wie in der DE-OS 40 30 529 beschrieben wird. Sie eignen sich auch zur Herstellung von Heißgasfiltern.

Die Herstellung von SiC-Fasern beschreibt die EP-A 438 117. Dabei überführt man beispielsweise Methylpolysilane zunächst in Polycarbosilane. Für die Faserbildung eignen sich, wie in jener Anmeldung beschrieben wird, Polycarbosilane, die bei Umgebungstemperatur Feststoffe sind und sich unter Schmelzen zu Fasern extrudieren lassen sowie flüssige Polycarbosilane, die nach dem Verspinnen aber sofort unschmelzbar gemacht werden müssen, damit sie beim Keramisieren nicht die Form verlieren. Die dabei erhaltenen Fasern weisen äußerst geringe Festigkeit auf. Für die Herstellung stabiler Fasern ist gemäß der Lehre der EP-A 438 117 eine zusätzliche Behandlung mit Härtern notwendig.

Aufgabe der vorliegenden Erfindung ist, Polycarbosilane zur Verfügung zu stellen, die in einfacher Weise die Herstellung stabiler, sauerstofffreier SiC-Formkörper, insbesondere in Faser-oder Fadenform gestatten. Weitere Aspekte der Erfindung ergeben sich weiter unten.

Gegenstand der Erfindung ist ein quellfähiges vernetztes Polycarbosilan. Bislang bekannte Polycarbosilane zeichnen sich dadurch aus, daß sie entweder in Lösungsmitteln löslich oder ganz unlöslich sind. Das erfindungsgemäße Polycarbosilan hingegen quillt in organischen Lösungsmitteln, wie flüssigen Chloralkanen, aromatischen Verbindungen oder aliphatischen oder cycloaliphatischen Ethern auf.

Ein weiterer Unterschied der erfindungsgemäßen quellfähigen vernetzten Polycarbosilane zu bekannten Polycarbosilanen ist, daß sie bei Umgebungstemperatur fest sind und durch Erhitzen auf Temperaturen unterhalb der Zersetzungstemperatur nicht geschmolzen werden können. Bekannte Polycarbosilane hingegen sind entweder flüssig oder schmelzbar oder aber, wie gesagt, in organischen Lösungsmitteln nicht quellfähig.

Das erfindungsgemäße Polycarbosilan ist dadurch erhältlich, daß man Polycarbosilane oder Polysilane als Ausgangsmaterial bei Temperaturen von bis zu 630 °C tempert. Dabei entsteht das quellfähige vernetzte Polycarbosilan der vorliegenden Erfindung, welches nach Abkühlung auf Umgebungstemperatur fest vorliegt und nicht mehr schmelzbar ist. Ein bevorzugtes Polycarbosilan ist durch Temperung von Polycarbosilanen oder Polysilanen im Bereich von 400 bis 630 °C, insbesondere 500 bis 610 °C, erhältlich.

Dabei arbeitet man bei Umgebungsdruck oder im Bereich von 2 mbar bis 5 bar. Die Zeitdauer der Temperaturbehandlung liegt vorteilhaft im Bereich von 10 Minuten bis 5 Stunden.

Als Ausgangsmaterial für die erfindungsgemäßen quellfähigen, vernetzten, unschmelzbaren Polycarbosilane kann man nach beliebigen Verfahren hergestellte Polysilane oder Polycarbosilane verwenden, vorausgesetzt, daß diese Ausgangsmaterialien noch nicht Bedingungen unterworfen worden sind, durch die sie in nicht mehr quellfähige Verbindungen überführt worden sind. Im Zweifelsfall kann der Fachmann dies durch einen einfachen Versuch überprüfen.

Besonders gut geeignetes Ausgangsmaterial stellen direkt synthetisierte Polycarbosilane bzw. Polysilane dar.

Diese Polycarbosilane sind Polymere mit einer Gerüststruktur aus den Elementen Kohlenstoff und Silicium, in welcher kettenbildende Si-Gruppen und Kohlenwasserstoffgruppen alternierend oder in statistischer Verteilung vorliegen können. Sie besitzen im wesentlichen ein Gerüst aus den Struktureinheiten der Formeln -A- (A) und $-Si(R^1)(R^2)-$ (B). $R^1$ und/oder $R^2$ bedeuten Wasserstoff, Alkyl, Cycloalkyl und/oder Phenyl, A steht für einen Alkylenrest mit 1 bis 6 C-Atomen, insbesondere Methylen, wobei die Struktureinheiten der Formeln (A) und (B) im Verhältnis von etwa 1:1 im Polycarbosilan vorliegen.

Die Gerüststruktur alternierend aufgebauter Polycarbosilane ist im wesentlichen kettenförmig bzw. linear und besteht z. B. aus wiederkehrenden Struktureinheiten der Formeln

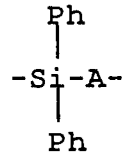 , 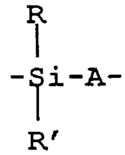 , 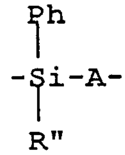

oder einer Kombination derselben. Als Ausgangsmaterial eignen sich auch Polycarbosilane mit statistischer Verteilung der Gruppen (A) und (B). In solchen Polycarbosilanen liegen die Gruppen (A) und (B) ebenfalls im Verhältnis von etwa 1:1 vor. Aufgrund der statistischen Verteilung weist die Polycarbosilankette ein Gerüst auf, in welchem Blöcke aus zwei oder mehr Struktureinheiten -A-, aus zwei oder mehr Struktureinheiten $-Si(R^1R^2)-$ sowie auch aus Struktureinheiten $-A-Si(R^1R^2)-$ vorliegen können. Solche Polycarbosilane können bei der Direktsynthese erhalten werden. In den vorstehenden Struktureinheiten steht der Si-Substituent Ph für Phenyl und die Si-Substituenten $R^1$, $R^2$, R, R' und R" stehen unabhängig voneinander in der Bedeutung Wasserstoff, Alkyl oder Cycloalkyl. Alkyl besitzt hierbei die Bedeutung eines gesättigten oder ungesättigten, geradkettigen oder verzweigten Alkylrestes, insbesondere eines Alkylrestes mit 1 bis 6 C-Atomen. Bevorzugte Alkylreste sind insbesondere Niederalkylreste mit 1 bis 4 C-Atomen. Beispiele für Alkyl sind Methyl, Ethyl, Propyl, Butyl, Pentyl, Hexyl, Octyl, Dodecyl, Hexadecyl, Isopropyl, Isobutyl, Tertiärbutyl oder Allyl. Cycloalkyl besitzt hierbei die Bedeutung eines gesättigten oder ungesättigten Cycloalkylrestes, insbesondere eines C5- oder C6-Cycloalkylrestes wie Cyclopentyl, Cyclohexyl oder Cyclopentenyl, Cyclohexenyl. In sehr bevorzugten Ausgestaltungen der Erfindung stehen die Si-Substituenten R, R' und R" jedoch für den Niederalkylrest Methyl oder Phenyl. In den obenstehenden Struktureinheiten der Polycarbosilane steht die Gruppe A, die mit den Siliciumatomen das Polycarbosilangerüst bildet, für einen geradkettigen oder verzweigten Alkylenrest mit 1 bis 6 C-Atomen. Zweckmäßig sind insbesondere Niederalkylenreste mit 1 bis 4 C-Atomen, wie z.B. Methylen, Ethylen, Trimethylen, Isobutylen. In bevorzugten Ausgestaltungen der Erfindung steht die kettenbildende Gruppe A für den Niederalkylenrest Methylen.

Die direkt synthetisierten Polycarbosilane sind solche, die durch Cokondensation von wenigstens einem Dihalogensilan und wenigsten einem Dihalogenkohlenwasserstoff in Gegenwart eines Alkalimetalles nach dem Verfahren der DE 38 41 348 hergestellt werden können. Hierzu werden Dihalogensilane $R^1R^2SiX_2$, $Ph_2SiX_2$, $RR'SiX_2$, $PhR''SiX_2$ (worin $R^1$, $R^2$, Ph, R, R' und R" die obenangegebene Bedeutung besitzen und X für Halogen, vorzugsweise für Chlor oder Brom steht) oder deren Gemische mit wenigstens einem Dihalogenkohlenwasserstoff der Formel Y-A-Y (worin A die obenangegebene Bedeutung besitzt und Y für die Halogene Chlor, Brom oder Jod, vorzugsweise für Chlor oder Brom, steht) in Gegenwart eines Alkalimetalles in einem inerten organischen flüssigen Medium miteinander umgesetzt. Die Reaktion wird im allgemeinen so geführt, daß zunächst eine Suspension des Alkalimetalles in einem geeigneten Lösungsmittel, beispielsweise in einem Kohlenwasserstoff wie Toluol, Xylol oder Dekalin, erzeugt wird. Anschließend werden in die Alkalimetallsuspension die übrigen Reaktanden (Dihalogensilane, Dihalogenkohlenwasserstoffe) eingebracht. Nach erfolgter Umsetzung kann man das Polycarbosilan durch jede geeignete Methode aus dem Reaktionsgemisch gewinnen. Ist das Polycarbosilan beispielsweise im Lösungsmittel löslich, so lassen sich die sonstigen unlöslichen Komponenten durch Filtration abtrennen. Das im Lösungsmittel zurückbleibende Polycarbosilan kann dann durch Waschen mit Wasser gereinigt und durch Entzug des Lösungsmittels zu einem Pulver getrocknet werden. Sind die gebildeten Polycarbosilane im Lösungsmittel aber unlöslich, so können sie durch ein geeignetes anderes Lösungsmittel extrahiert werden, anschließend durch Waschen mit Wasser gereinigt und durch Entzug des Lösungsmittels zu einem Pulver getrocknet werden.

In vorteilhaften Ausgestaltungen der Erfindung besitzen die Polycarbosilane des Ausgangsmaterials im wesentlichen ein Gerüst aus der Struktureinheit I und II, aus einer Kombination der Struktureinheit I und II mit III und/oder mit IV, aus einer Kombination der Struktureinheit I und III mit IV oder aus einer Kombination der Struktureinheit I und IV,

$-CH_2-$ (I)

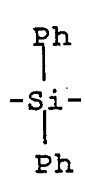 (II), 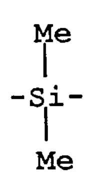 (III), 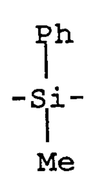 (IV),

worin der Si-Substituent Ph für Phenyl und der Si-Substituent Me für Methyl steht. Diese bevorzugten Polycarbosilane können statistische Verteilung der Formeln (I) und (II) bzw. (III) oder (IV) aufweisen. Sie enthalten dann Blöcke aus zwei oder mehr $-CH_2$-Gruppen, zwei oder mehr $-Si(Ph)_2$-Gruppen, zwei oder mehr $-Si(Me)_2$-Gruppen bzw. zwei oder mehr -Si(Ph)(Me)-Gruppen. Darüberhinaus sind in solchen Polycarbosilanen auch Einheiten mit alternierenden Si-C-Ketten vorhanden, z.B. $-Si(Ph)_2-CH_2$-Gruppen, $-Si(Me)_2-CH_2$-Gruppen bzw. $-Si(Ph)(Me)-CH_2$-Gruppen. Bevorzugtes Ausgangsmaterial stellen Polycarbosilane dar,

die im wesentlichen ein Gerüst aus der Struktureinheit I und II oder aus einer Kombination der Struktureinheit I mit II und III besitzen. Besonders bevorzugte Polycarbosilane sind Polydiphenylcarbosilane, insbesondere mit Molgewichten von 700 bis 1100 g/mol, vorzugsweise von 800 bis 1000 g/mol (Zahlenmittel), und Poly(diphenyl-co-dimethyl)carbosilane, insbesondere mit Molgewichten von 800 bis 1300 g/mol, vorzugsweise 900 bis 1200 g/mol (Zahlenmittel).

Polycarbosilane, in denen ein Anteil von wenigstens 20 Mol-% der Carbosilan-Substituenten, in bevorzugten Ausgestaltungen der Erfindung wenigstens 50 Mol-%, noch besser wenigstens 65 Mol-%, insbesondere wenigstens 70 Mol-% der Carbosilan-Substituenten Phenylsubstituenten sind, sind besonders gut geeignet als Ausgangsmaterial. Als Carbosilan-Substituenten werden hierbei nur die Si-Substituenten der Polycarbosilane verstanden, die als einwertige Reste mit nur einem Si-Atom des Polycarbosilans verknüpft sind, nicht jedoch die zweiwertigen, mit den Si-Atomen das Polycarbosilangerüst aufbauenden Gruppen. Analoges gilt für die noch zu beschreibenden Polycarbosilane mit Hetero-Elementen wie Bor.

Die erfindungsgemäßen quellfähigen vernetzten Polycarbosilane können auch Heteroatome enthalten, vorzugsweise aus der Gruppe umfassend Bor, Aluminium, Gallium, Germanium, Zinn, Blei, Stickstoff, Phosphor, Arsen, Antimon, Selen, Tellur, Titan, Zirkonium, Hafnium, Vanadium, Niob, Tantal, Chrom, Molybdän, Wolfram, Mangan, Nickel, Palladium und Platin. Wie oben schon ausgeführt, soll Sauerstoff vorzugsweise nicht in den Polycarbosilanen enthalten sein. Aus der Gruppe der Heteroatome enthaltenden Polycarbosilane sind solche mit Bor, Aluminium, Titan, Zirkonium oder Hafnium bevorzugt.

Der Gehalt an Polycarbosilanen mit Heteroatomen im quellfähigen erfindungsgemäßen Polycarbosilan kann zwischen 0 und 100 Gew.-% liegen.

Bevorzugtes Ausgangsmaterial für die Herstellung dieser quellfähigen vernetzten Polycarbosilane sind die aus der DE-OS 41 02 315 bekannten Heteroatome enthaltenden Polycarbosilane. Diese sind sauerstofffrei. Der Aspekt der vorliegenden Erfindung betreffend Heteroatome enthaltende Polycarbosilane wird anhand von Polyborcarbosilanen weiter erläutert. Analoges gilt für Polycarbosilane mit anderen Heteroatomen.

Die in dieser Variante der Erfindung verwendeten Polyborcarbosilane sind Polymere mit einer Gerüststruktur aus den Elementen Kohlenstoff, Silicium und Bor, wobei im Gerüst die Si-Gruppen und Kohlenwasserstoffgruppen ebenso wie bei den obigen Polycarbosilanen alternierend oder in statistischer Verteilung vorliegen, aber darüber hinaus ein Teil der Si-Atome im Carbosilangerüst durch B-Atome ersetzt ist. Die Gerüststruktur der Polyborcarbosilane besteht somit insbesondere aus wiederkehrenden Struktureinheiten der Formeln

-A- (A)

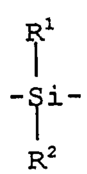 (B) und 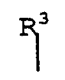 (C),

worin $R^1$ und/oder $R^2$ für Wasserstoff, Alkyl, Cycloalkyl oder Phenyl stehen (Alkyl bzw. Cycloalkyl wie oben bereits definiert), $R^3$ für einen Niederalkylrest mit 1 bis 4 C-Atomen (Niederalkyl wie oben bereits definiert) oder einen Phenylrest Ph steht und die Gerüstgruppe A die Bedeutungen des oben bereits für die Polycarbosilangerüste definierten Alkylenrestes A besitzt. Das Molverhältnis der Einheiten (A):[(B)+(C)] beträgt etwa 1:1. Sowohl bei den Si-Substituenten als auch bei den B-Substituenten des Polyborcarbosilans ist der Phenylsubstituent Ph bevorzugt. Der Alkylenrest A im Polyborcarbosilan ist vorzugsweise der Niederalkylenrest Methylen. Sehr bevorzugte Polyborcarbosilane sind daher solche, in denen jeder der Substituenten $R^1$, $R^2$ und $R^3$ für den Phenylrest Ph steht und der Alkylenrest A Methylen bedeutet, und die als Poly(phenyl-co-diphenyl)borcarbosilane bezeichnet werden. Die Poly(phenyl-co-diphenyl)borcarbosilane besitzen insbesondere Molgewichte von 500 bis 1000 g/mol (Zahlenmittel).

In Polycarbosilanen mit statistischer Verteilung liegen Blöcke aus 2 oder mehr Einheiten der Formel (A), (B) bzw. (C) vor. Daneben finden sich auch Struktureinheiten der Formel (V) und (VI)

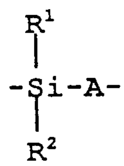 (V) 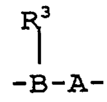 (VI).

Alternierend aufgebaute Polycarbosilane umfassen Struktureinheiten der Formel (V) und (VI).

In dieser Variante gilt, daß Polyborcarbosilane mit Phenylsubstituenten bevorzugt sind. Besonders günstig ist es, wenn wenigstens 20 Mol-%, vorzugsweise 50 Mol-% und in besonders vorteilhaften Ausgestaltungen wenigstens 65 Mol-%, insbesondere wenigstens 70 Mol-% der Carbosilan-Substituenten (hier bezogen auf Summe aus Si-Substituenten und B-Substituenten) im Polyborcarbosilan Phenylsubstituenten sind. Weiterhin kann das Molverhältnis der Struktureinheiten (B) und (C) bzw. V und VI in den Polyborcarbosilanen in einem weiten Bereich derart variieren, daß der Anteil der Bor-Struktureinheit der Formel (C) bzw. VI im Polyborcarbosilan von geringen Molanteilen, z.B. 0,1 Mol-% bishin zu 50 Mol-% beträgt. Bevorzugte Polyborcarbosilane zeichnen sich dadurch aus, daß die Struktureinheiten der Formeln (B) und (C) bzw. (V) und (VI) im Molverhältnis von 99:1 bis 1:1, insbesondere im Molverhältnis von 19:1 bis 1:1, im Polyborcarbosilan vorliegen.

Die Polyborcarbosilane können analog dem Verfahren der DE 38 41 348 gewonnen werden. Hierzu werden wenigstens ein Dihalogensilan $R^1R^2SiX_2$ ($R^1$, $R^2$ und X mit der oben angegebenen Bedeutung), wenigstens ein Dihalogenkohlenwasserstoff der Formel Y-A-Y (A und Y mit der oben angegebenen Bedeutung) und wenigstens ein Bordihalogenid $R^3BZ_2$ (worin $R^3$ die obige Bedeutung besitzt und Z für die Halogene Chlor, Brom oder Jod, vorzugsweise für Chlor oder Brom steht) in Gegenwart eines Alkalimetalles in einem inerten organischen flüssigen Medium in einer Cokondensationsreaktion miteinander umgesetzt. Die Menge der eingesetzten Dihalogensilane und der eingesetzten Borverbindung einerseits und die Menge der eingesetzten Dihalogenkohlenwasserstoffe andererseits wird bevorzugt so bemessen, daß insgesamt ein Molverhältnis der Summe aus Dihalogensilanen und Borverbindung einerseits zu den Dihalogenkohlenwasserstoffen andererseits von etwa 1:1 vorliegt. Das Molverhältnis der drei Reaktanden Dihalogensilan, Borverbindung und Dihalogenkohlenwasserstoff beträgt somit etwa (2-n):n:2, wobei n die eingesetzte Molmenge der Borverbindung ist und einen Wert von bis zu 1 annehmen kann; Werte von $n = 0{,}1$ bis $n = 1$ sind bevorzugt. Ein Verhältnis von einerseits der Summe aus Dihalogensilan und Borverbindung zu andererseits dem Dihalogenkohlenwasserstoff mit Werten von etwa 1:1 ist zwar bevorzugt, es sind aber auch Abweichungen von bis zu 20 % möglich. Die Reaktionsbedingungen und die Reaktionsführung zur Herstellung der Polyborcarbosilane können direkt an das Verfahren der DE 38 41 348 zur Herstellung von direkt synthetisierten Polycarbosilanen angelehnt werden. Zusätzliche Einzelheiten zur Herstellung von Polyborcarbosilanen können aber gewünschtenfalls auch der parallel anhängigen deutschen Patentanmeldung 41 02 315 entnommen werden.

Ein weiterer Gegenstand der Erfindung ist das Verfahren zur Herstellung der quellfähigen, vernetzten Polycarbosilane. Es ist dadurch gekennzeichnet, daß man Polycarbosilane oder Polysilane, die gegebenenfalls Heteroatome enthalten können, als Ausgangsmaterial einsetzt und bei Temperaturen von bis zu 630 °C, vorzugsweise 400 bis 630 °C, insbesondere 500 bis 610 °C, tempert. Gewünschtenfalls kann man einen Vernetzungsbeschleuniger zusetzen, z.B. Polydiphenylborosiloxan. Sofern man Polycarbosilane einsetzt, die Heteroatome, insbesondere Bor, enthalten, ist ein Zusatz eines Vernetzungsbeschleunigers nicht nötig.

Bevorzugte Ausgangsmaterialien, bevorzugte Heteroatome und Verfahrensparameter bei der Temperung bezüglich Druck und Zeitdauer sind oben beschrieben.

Die erfindungsgemäßen quellfähigen, vernetzten, unschmelzbaren Polycarbosilane eignen sich hervorragend zur Erzeugung von Polycarbosilan-Formkörpern. Dazu werden sie zunächst in ein Gel überführt. Ein solches Polycarbosilan-Gel, umfassend mindestens ein, ein organisches Lösungsmittel enthaltendes, gequollenes vernetztes Polycarbosilan ist ebenfalls Gegenstand der Erfindung. Gegebenenfalls Heteroatome enthaltende Polycarbosilane, die vorzugsweise im Gel enthalten sind, entsprechen den weiter oben als bevorzugt beschriebenen Polycarbosilanen. Das Gel kann weitere Hilfstoffe oder Zusätze enthalten, z.B. Pigmente, Füllstoffe, Beschwerungsmittel etc.

Das erfindungsgemäße Polycarbosilan-Gel liegt vorzugsweise in homogenisierter Form vor.

Besonders gut geeignete Lösungsmittel sind bei Umgebungstemperatur flüssige Chloralkane, z.B. $CCl_4$, $CHCl_3$, $CH_2Cl_2$, chlorierte Alkane wie Trichlorethan, Tetrachlorethan, bei Umgebungstemperatur flüssige aromatische Verbindungen, z.B. Benzol, Toluol, Xylol sowie aliphatische oder cycloaliphatische Ether mit 2

bis 8 C-Atomen, vorzugsweise 2 bis 4 C-Atomen, Diethylether, Di-n-Butylether, insbesondere Tetrahydrofuran.

Andere organische Lösungsmittel sind ebenfalls brauchbar, sofern das quellfähige, vernetzte, unschmelzbare Polycarbosilan bei Kontakt mit dem jeweils verwendeten Lösungsmittel quillt. Zur Überprüfung, ob ein spezielles Lösungsmittel brauchbar ist, kann man einfach einen solchen Vorversuch durchführen.

Bevorzugte Polycarbosilan-Gele enthalten das Polycarbosilan in einer Menge von 10 bis 70 Gew.-%, vorzugsweise 40 bis 60 Gew.-%, bezogen auf das Gesamtgewicht des Gels.

Zur Herstellung der Gele kontaktiert man das quellfähige, vernetzte, unschmelzbare Polycarbosilan mit dem gewünschten Lösungsmittel. Zweckmäßig gibt man zunächst eine größere Menge Lösungsmittel hinzu und gießt oder verdampft einen Teil des zugegebenen Lösungsmittels wieder ab. Vorzugsweise homogenisiert man das entstandene Polycarbosilan-Gel, beispielsweise mit Rührern hoher Drehzahl (z.B. einem Fabrikat Ultraturrax).

Die erfindungsgemäßen Gele eignen sich hervorragend zur Herstellung von Polycarbosilan-Formkörpern. Dieses Anwendungsverfahren ist ebenfalls Gegenstand der Erfindung. Es ist dadurch gekennzeichnet, daß man ein Polycarbosilan-Gel in die gewünschte Form bringt und mit einem Fällöl, mit welchem einerseits das organische Lösungsmittel des Polycarbosilan-Gels mischbar ist, in welchem andererseits das vernetzte Polycarbosilan aber nicht quillt, kontaktiert. Dabei geht das organische Lösungsmittel in das Fällöl über, und es bildet sich ein Polycarbosilan-Formkörper.

Besonders gut geeignet als Fällöl sind Silikonöle. Man kann aber auch z.B. Paraffinöl als Fällöl verwenden.

Die beim Kontakt mit dem Fällöl gebildeten Polycarbosilan-Formkörper gewinnen noch an Festigkeit, wenn man den Polycarbosilan-Formkörper während des Kontakts mit dem Fällöl einer Temperaturbehandlung, vorzugsweise unterhalb des Siedepunkts des Fällöls, unterwirft. Die erhöhte Festigkeit wird darauf zurückgeführt, daß Reste des organischen Lösungsmittels aus dem gebildeten Formkörper ausgetrieben werden. Zweckmäßig geht man so vor, daß man das quellfähige Polycarbosilan zunächst mit kaltem Fällöl (Temperatur vorteilhaft zwischen 20 und 40 °C) kontaktiert und die Temperatur dann erhöht, z.B. auf 100 bis 150 °C.

Etwaig am Formkörper anhaftendes Fällöl, z.B. Silikonöl, kann man mit geeigneten Lösungsmitteln, die sich mit dem Fällöl mischen lassen, das vernetzte Polycarbosilan aber nicht quellen lassen, entfernen. Bei Verwendung von Silikonöl als Fällöl sind beispielsweise mittelkettige Kohlenwasserstoffe wie Pentan, Hexan oder Heptan gut verwendbar.

Im Prinzip kann man beliebige Formkörper herstellen, z. B. Kugeln, Würfel, Profile, Monolithen oder andere Formen, wie sie bei der Anwendung von SiC üblicherweise benötigt werden. Herstellen kann man Formkörper zur Anwendung als Katalysatorträger, Dichtringe oder Filterkerzen für Heißgasfilter und für andere Zwecke.

Eine bevorzugte Ausführungsform der Erfindung sieht vor, daß man das Polycarbosilan-Gel unter Faser- oder Fadenbildung in das Fällöl einbringt. Hierzu kann es beispielsweise durch eine Düse in das Fällöl extrudiert bzw. eingespritzt werden. Hierbei ist es besonders vorteilhaft, wenn man das Polycarbosilan-Gel in strömendes Fällöl einbringt, da hierbei der gebildete Faden bzw. die Faser gestreckt wird. Besonders vorteilhaft ist es, ein Fällöl zu verwenden, dessen Dichte in etwa der Dichte des verwendeten Polycarbosilan-Gels entspricht.

Die gebildeten Polycarbosilan-Fasern bzw. Polycarbosilan-Fäden kann man auf die gewünschte Länge zerkleinern. Ein Vorteil des erfindungsgemäßen Verfahrens ist es, daß man auch lange Fäden herstellen kann. Die Länge der Fäden ist praktisch nur durch die verwendete Vorrichtung begrenzt. Die bei diesem Anwendungsverfahren erhältlichen Polycarbosilan-Formkörper, insbesondere in Faser- oder Fadenform, sind ebenfalls Gegenstand der Erfindung.

Die beim obigen Verfahren erhaltenen Polycarbosilan-Formkörper werden dann durch Keramisieren in SiC-Formkörper überführt. Dies geschieht zweckmäßig unter Inertgas, z.B. Argon, bei Temperaturen von 900 bis 2100 °C. Die Zeitdauer ist abhängig von der Form. Bei Fasern oder Fäden reicht eine Temperaturbehandlung über eine Zeitdauer von 2 bis 8 Stunden aus. Die erfindungsgemäßen Formkörper weisen den Vorteil auf, daß sie bei der im Anschluß an die Formgebung notwendigen thermischen Keramisierung weder unter Formverlust erweichen noch schmelzen. Die vorliegende Erfindung gestattet auf einfache Weise die Herstellung von SiC-Formkörpern hoher Stabilität. Besonders die Formkörper in Faser- bzw. Fadenform weisen eine bislang unbekannte Stabilität auf.

Die folgenden Beispiele sollen die Erfindung weiter erläutern, ohne sie in ihrem Umfang einzuschränken.

Beispiele

Beispiel 1:

Herstellung der Ausgangsmaterialien.

Allgemeine Herstellungsvorschrift:

Die Polycarbosilane bzw. Polyborcarbosilane wurden unter gleichbleibenden Versuchsbedingungen hergestellt. Die Halogensilan-Ausgangsmaterialien (Ansatzgrößen in Tabelle 1) wurden mit 85 g (3,7 mol) Natrium und 130,4 g (0,75 mol) Methylenbromid zur Umsetzung gebracht.

Tabelle 1

| Ansatzgrößen in MOL | | | |
|---|---|---|---|
| | $(CH_3)_2SiCl_2$ | $(C_6H_5)_2SiCl_2$ | $Cl_2B(C_6H_5)$ |
| 1.1. D-PPC [1)] | - | 0,75 | - |
| 1.2. D-PPMC1 [2)] | 0,375 | 0,375 | - |
| 1.3. D-PPMC0,33 [3)] | 0,563 | 0,188 | - |
| 1.4. D-PPC/B0,04 [4)] | - | 0,72 | 0,03 |

[1)] Direkt synthetisiertes Polydiphenylcarbosilan

[2)] Direkt synthetisiertes Poly(diphenyl-co-dimethyl)carbosilan, Molverhältnis $(CH_3)_2SiCl_2$ : $(C_6H_5)_2SiCl_2$ wie 1:1

[3)] Wie unter 2, aber Molverhältnis $(CH_3)_2SiCl_2$ : $(C_6H_5)_2SiCl_2$ wie 3:1

[4)] Direkt synthetisiertes Poly(phenyl-co-diphenyl)borcarbosilan, Si:B = 1:0,04

In einem 2-l-Dreihalskolben mit Rückflußkühler, Überkopfrührer und Tropftrichter wurde das Natrium in 800 ml Xylol unter Schutzgas und Rühren zum Schmelzen gebracht. Anschließend wurde das homogenisierte Monomerengemisch vorsichtig in das bei 138 °C siedende Xylol getropft. Schon nach kurzer Zeit bildete sich eine graue Trübung, die im Verlauf der Umsetzung in eine schwarz-blaue Färbung überging. Nach beendeter Zugabe wurde unter Rückfluß bis zum Erreichen der Siedetemperatur des Xylols von 138 °C weiter erhitzt. Die Xylollösung wurde dann filtriert und am Rotationsverdampfer eingeengt. Das isolierte Produkt wurde 15 Stunden im Hochvakuum bei 100 °C getrocknet.

Beispiel 2:

Herstellung quellfähiger, vernetzter Polycarbosilane.

Allgemeine Herstellungsvorschrift:

Das als Ausgangsmaterial ausgewählte Polycarbosilan bzw. Polyborcarbosilan oder eine Mischung aus 97 Gew.-% des Silans und 3 Gew.-% Polydiphenylborosiloxan ("Python") wurde einer Destillationstemperung unterworfen. Zunächst erfolgte unter Hochvakuum die Aufheizung auf 450 °C. Diese Temperatur wurde 60 Minuten gehalten, wobei wenig Destillat überging. Nach Einleiten von Argon erfolgte eine Erhöhung der Temperatur auf 600 °C. Dabei erstarrte die niedrigviskose Schmelze zu einem hochvikosen, gelartigen Produkt. Beim Abkühlen wurde das gewünschte quellfähige vernetzte Polycarbosilan erhalten. In Tabelle 2 sind die eingesetzten Ausgangsmaterialien, Zusätze, die Bezeichnung des erhaltenen quellfähigen Carbosilans, die Temperungszeit bei 600 °C, die Ausbeuten an Feststoff und Destillat sowie die elementare Zusammensetzung des quellfähigen Polycarbosilan-Feststoffes zusammengestellt.

Tabelle 2

| | Eingesetztes Ausgangsmaterial | Zusatz | Bezeichnung des quellfähigen, vernetzten Carbosilans | Temperungszeit bei 600 °C/min | Ausbeute/ Gew.-% fest | flüssig | Elementare Zusammensetzung des Feststoffs / Gew.-% Si | C | H | B |
|---|---|---|---|---|---|---|---|---|---|---|
| 2.1. | D-PPC | Python | D-PPC-PP | 50 | 83,4 | 9,4 | 15,6 | 76,7 | 5,51 | 0,08 |
| 2.2. | D-PPC | - | D-PPC-P | 50 | 81,5 | 8,5 | 16,3 | 79,4 | 5,57 | - |
| 2.3. | D-PPMC1 | Python | D-PPMC1-PP | 50 | 68,1 | 26,7 | 19,2 | 72,4 | 6,30 | 0,09 |
| 2.4. | D-PPMC1 | - | D-PPMC1-P | 50 | 62,7 | 31,7 | 20,3 | 77,7 | 6,09 | - |
| 2.5. | D-PPMC0,33 | Python | D-PPMC0,33-PP | 50 | 48,3 | 38,0 | 22,3 | 67,7 | 6,81 | 0,12 |
| 2.6. | D-PPMC0,33 | - | D-PPMC0,33-P | 50 | 42,1 | 52,0 | 22,5 | 70,6 | 6,98 | - |
| 2.7. | D-PPMC1/B0,04 | Python | D-PPMC1/B0,04-PP | 10 | 71,3 | 23,6 | 18,8 | 70,5 | 5,97 | 0,23 |
| 2.8. | D-PPMC1/B0,04 | - | D-PPMC1/B0,04-P | 10 | 63,4 | 30,3 | 19,9 | 73,8 | 6,13 | - |

Beispiel 3:

Herstellung von Gelen von quellfähigen, vernetzten Polycarbosilanen.

Zur Herstellung von Gelen, die quellfähige vernetzte Polycarbosilane enthalten, wurden die in Beispiel 2 hergestellten vernetzten Carbosilane nach Abkühlen mit der 5-fachen Menge Tetrahydrofuran gemischt und

50 Minuten mit einem Homogenisator (Ultraturrax) homogenisiert. Am Rotationsverdampfer wurden dann 80 % des eingesetzten Tetrahydrofurans wieder entfernt, so daß das Verhältnis von quellfähigem vernetzten Polycarbosilan zu Tetrahydrofuran etwa 1:1 betrug. Auf diese Weise wurden Gele von D-PPC-PP, D-PPC-P, D-PPMC1-PP, D-PPMC1-P, D-PPMC0,33-PP, D-PPMC0,33-P, D-PPMC1/B0,04-PP, D-PPMC1/B0,04-P hergestellt.

Die stabilen gequollenen Gele konnten direkt zur Herstellung von Siliciumcarbid-Formkörpern, beispielsweise Fäden oder Fasern, eingesetzt werden.

Beispiel 4:

Herstellung von SiC-Fasern.

Allgemeine Herstellungsvorschrift:

Das Tetrahydrofuran enthaltende Polycarbosilan-Gel aus Beispiel 3 wurde mit Hilfe eines manuell zu bedienenden Kolbenapparates durch eine röhrenförmige Düse mit einem Durchmesser von 0,8 mm direkt in ein strömendes, 25 °C warmes Silikonölbad gepreßt. Es bildete sich ein mechanisch belastbarer Polycarbosilanfaden, der durch das strömende Silikonöl verstreckt wurde. Auf diese Weise wurden Fäden hergestellt, deren Länge nur durch die Apparatgröße begrenzt war. Nach der Formung im Silikonöl wurde die Temperatur des Öls auf 150 °C erhitzt. Dabei konnte das Tetrahydrofuran restlos aus den Fäden entfernt werden. Hierbei stieg die mechanische Festigkeit der Fäden deutlich an. Sie wurden aus dem Silikonöl herausgenommen und mit n-Hexan ölfrei gewaschen. Die Keramisierung der so behandelten und getrockneten Fäden erfolgte bei 1100 °C unter Schutzgas. Es bildeten sich mechanisch stabile Fäden mit einer elementaren Zusammensetzung von Silicium und Kohlenstoff im Verhältnis von etwa 1:5,7 bis 10,6. Das Röntgendiffraktogramm dieser Fäden zeigte β-SiC-Reflexe.

Eine analoge Herstellung von Fasern ist z.B. durch Zerkleinern wie Schneiden oder Zerreißen der Fäden möglich.

Angaben zu den eingesetzten Polycarbosilanen, der elementaren Zusammensetzung der eingesetzten Ausgangs-Carbosilane, die gegebenenfalls "Python" enthielten, die elementare Zusammensetzung der gebildeten, lösungsmittelfreien Fäden vor dem Keramisieren und nach dem Keramisieren sind in Tabelle 3 zusammengestellt.

Tabelle 3

Elementare Zusammensetzungen in Gew.-%

| Bezeichnung des eingesetzten quellfähigen Polycarbosilans | Ausgangs-Carbosilan (+ Python) | | | | Faden vor dem Keramisieren | | | | Faden nach dem Keramisieren | | | |
|---|---|---|---|---|---|---|---|---|---|---|---|---|
| | Si | C | H | B | Si | C | H | B | Si | C | B | Molverhältnis C/Si |
| D-PPC-PP | 13,7 | 79,3 | 6,2 | 0,1 | 16,1 | 77,5 | 5,58 | 0,08 | 20,6 | 77,9 | 0,15 | 8,9 |
| D-PPC-P | 13,8 | 79,4 | 6,2 | - | 16,0 | 79,0 | 5,7 | - | 17,5 | 78,9 | - | 10,6 |
| D-PPMC1-PP | 17,7 | 73,7 | 7,3 | 0,1 | 20,1 | 71,3 | 6,1 | 0,09 | 27,2 | 72,6 | 0,22 | 6,3 |
| D-PPMC1-P | 18,7 | 72,5 | 7,3 | - | 20,7 | 73,4 | 6,3 | - | 24,4 | 70,4 | - | 6,8 |
| D-PPMC0,33-PP | 21,6 | 66,3 | 8,0 | 0,1 | 20,3 | 66,8 | 6,7 | 0,17 | 26,3 | 68,6 | 0,31 | 6,1 |
| D-PPMC0,33-P | 21,9 | 66,3 | 8,1 | - | 24,0 | 66,9 | 6,6 | - | 27,6 | 67,3 | - | 5,7 |
| D-PPMC1/B0,04-PP | 17,8 | 72,1 | | 0,26 | 18,7 | 69,8 | 6,0 | 0,3 | 22,3 | 71,2 | 0,54 | 7,5 |
| D-PPMC1/B0,04-P | 18,0 | 72,3 | | 0,17 | 19,5 | 72,4 | 6,0 | 0,1 | 20,9 | 72,8 | 0,18 | 8,2 |

Der Gehalt an Kohlenstoff kann gewünschtenfalls durch geeignete Oxidationsmittel (z.B. $SiO_2$) oder höhere Keramisierungstemperatur verringert werden.

## Patentansprüche

1. Quellfähiges, vernetztes Polycarbosilan, erhältlich durch eine Temperung von Polycarbosilanen oder Polysilanen als Ausgangsmaterial bei Temperaturen von bis zu 630 °C.

2. Quellfähiges, vernetztes Polycarbosilan nach Anspruch 1, dadurch gekennzeichnet, daß es einer Temperung im Bereich von 400 bis 630 °C, vorzugsweise 500 bis 610 °C, unterworfen wurde.

3. Quellfähiges, vernetztes Polycarbosilan nach Anspruch 1 oder 2, gekennzeichnet durch seine Herstellung aus einem direkt synthetisierten Polycarbosilan oder einem Polysilan, vorzugsweise aus einem Phenylgruppen enthaltenden direkt synthetisierten Polycarbosilan oder Polysilan, als Ausgangsmaterial.

4. Quellfähiges, vernetztes Polycarbosilan nach einem der vorhergehenden Ansprüche, gekennzeichnet durch einen Gehalt an Heteroatomen ausgewählt aus der Gruppe umfassend B, Al, Ga, Ge, Sn, Pb, N, P, As, Sb, Se, Te, Ti, Zr, Hf, V, Nb, Ta, Cr, Mo, W, Mn, Ni, Pd, Pt.

5. Verfahren zur Herstellung des quellfähigen, vernetzten Polycarbosilans nach einem der Ansprüche 1 bis 4, gekennzeichnet durch eine Temperung von Polycarbosilanen oder Polysilanen bei Temperaturen von bis zu 630 °C, vorzugsweise 500 bis 610 °C.

6. Polycarbosilan-Gel, umfassend mindestens ein, ein organisches Lösungsmittel enthaltendes, gequollenes, vernetztes Polycarbosilan nach einem der Ansprüche 1 bis 5.

7. Polycarbosilan-Gel nach Anspruch 6, dadurch gekennzeichnet, daß es als organisches Lösungsmittel ein bei Umgebungstemperatur flüssiges Chloralkan, eine bei Umgebungstemperatur flüssige aromatische Verbindung oder einen aliphatischen oder cycloaliphatischen Ether mit 2 bis 8 C-Atomen, vorzugsweise mit 2 bis 4 C-Atomen, enthält.

8. Polycarbosilan-Gel nach Anspruch 6 oder 7, dadurch gekennzeichnet, daß es das vernetzte Polycarbosilan in einer Menge von 10 bis 70 Gew.-%, bezogen auf das Gesamtgewicht des Gels, enthält.

9. Verfahren zur Herstellung von Polycarbosilan-Formkörpern, dadurch gekennzeichnet, daß man ein Polycarbosilan-Gel nach einem der Ansprüche 6 bis 8 formt und mit einem Fällöl, mit welchem einerseits das organische Lösungsmittel des Polycarbosilan-Gels mischbar ist, in welchem andererseits das vernetzte Polycarbosilan aber nicht quillt, kontaktiert, wobei das organische Lösungsmittel in das Fällöl übergeht und sich ein Polycarbosilan-Formkörper bildet.

10. Verfahren nach Anspruch 9, dadurch gekennzeichnet, daß man den Polycarbosilan-Formkörper während des Kontakts mit dem Fällöl einer Temperaturbehandlung unterwirft.

11. Verfahren nach Anspruch 9 oder 10, dadurch gekennzeichnet, daß man das Polycarbosilan-Gel unter Faser- oder Fadenbildung in das Fällöl einbringt.

12. Verfahren nach einem der Ansprüche 9 bis 11, dadurch gekennzeichnet, daß man etwaig am Formkörper anhaftendes Fällöl entfernt.

13. Verfahren nach einem der Ansprüche 9 bis 12, dadurch gekennzeichnet, daß man zur Faden- oder Faserbildung das Polycarbosilan-Gel in strömendes Fällöl einbringt.

14. Verfahren nach einem der Ansprüche 9 bis 13, dadurch gekennzeichnet, daß man als Fällöl Siliconöl verwendet.

15. Verfahren nach einem der Ansprüche 9 bis 14, dadurch gekennzeichnet, daß man ein homogenisiertes Polycarbosilan-Gel verwendet.

16. Polycarbosilan-Formkörper, insbesondere in Faser- oder Fadenform, erhältlich nach dem Verfahren der Ansprüche 9 bis 15.

17. SiC-Formkörper, erhältlich durch Keramisieren des Polycarbosilan-Formkörpers nach Anspruch 16.